# EUROPEAN PATENT APPLICATION

(11) **EP 2 347 813 A1**
(43) Date of publication of application: **27.07.2011**
(21) Application number: 10425015.4
(22) Date of filing: 26.01.2010
(51) Int. Cl.: B01D 35/18, C10G 31/09, C10M 175/00

(54) **Device for filtering motor oil along with blow-by vapours treatment**

(71) Applicant: Union Key S.R.L., 73100 Lecce (IT)
(72) Inventor: Giannone, Piero, 73023 Lizzanello-Fraz. Merine Lecce (IT)
(74) Representative: Bruni, Giovanni

(57) **Abstract**

Device applicable to common internal combustion engines with means (5) for filtering motor oil from the undesired solid fraction and with an expansion/condensation chamber (8) provided with an electrode (10) for an expansion/separation treatment of the liquid phase and for filtration of the blow-by flows and respective process.

## Description

The present invention relates to a device for a more accurate filtration of motor oil which can be applied to common internal combustion engines. In particular, such device allows the lubricant to be refined from the undesired solid fraction in parallel to blow-by vapours treatment.

In the current state of art, a series of applications is known regarding the filtration of motor oil which is particularly applied to internal combustion engines for auto-traction or generally little engines.

For example, the international patent application W00234422 relates to an "outer" cleaning system for the inner portions of an internal combustion engine, which is made up of an outer unit provided with a filtering means, the unit being conceived to let a cleaning solution in the engine, which is suitable for the engine to be treated. Such solution is pumped inside the engine by means of the oil pump in a continuous way and while the engine is working during the entire "cleaning" process.

The US patent US20040154970 describes instead an almost cylindrically-shaped filter for motor oil, to be used in internal combustion engines, which comprises a filtering element which is active both mechanically and chemically, preferably made up of a plurality of pellets arranged inside the filtering element. Finally, the US patent US5322596 to Premo Lubrication Technologies is surely the most interesting case as the present invention is provided as an improvement of the same. In particular, the patent relates to a device for filtering motor oil from solid particulate and volatile compounds. The device is made up of a "traditional" oil filter, at the top of which an evaporation chamber is provided, which is connected with said filter. The motor oil to be filtered firstly goes through the "traditional" filter in order to remove the solid impurities and then goes through the evaporation chamber, which is heated outside, in order to separate the residual volatile compounds. Surely, on the one hand such application is advantageous as it provides a more accurate filtration of the motor oil by means of the additional filtration of the same oil in the evaporation chamber on top of the same motor oil filter; while being however disadvantageous to the engine owing to drawbacks related to the blow-by vapours flow. The blow-by flow is the flow of oil vapours, coming from the engine sump, which are recirculated inside the suction duct and therefore burned in the combustion chamber. In particular, this recirculation occurs naturally owing to the depression generated in the suction duct. When the engine revolutions increase, the suction depression is greater; thus there is also a greater risk that some oil in liquid phase is recirculated during suction, and therefore in the chamber, together with the vapour phase. Such phenomenon is undesired as it leads to a sensible worsening of the efficiency and environmental impact of the combustion provided in the engine. In order to obviate this drawback, producers generally provide an on-off type valve between the engine sump and the suction duct, which as it closes when reaching a determined number of revolutions, prevents the blow-by vapours to be recirculated. As a consequence, there is no vent volume for said vapours. The present invention solves the above described drawbacks as it improves the device according to the previous state of art in that it allows the oil vapours, and possibly the liquid oil as well, coming from the sump to be vented inside the evaporation chamber, which is heated outside. Moreover, inside said chamber, the liquid oil can be separated from the vapour phase, and both the phases are filtered in the filter itself. Therefore there is no recirculation of the liquid phase in the suction manifold.

As already previously stated, the present invention solves this strongly undesired technical drawback since it is a traditional filter for motor oil combined with venting and filtering the blow-by flow coming from the sump inside a condensation/expansion chamber provided with electrode, arranged at the top of said "traditional" filter.

These and other advantages will be described in the following description of the invention, specifically referring to the drawings 1/1 and 2/2, which represent different, not limiting and preferred embodiment examples of the present invention, in which:
- Fig. 1 is a longitudinal section of the filtration device highlighting its two main portions: the filter cartridge for the solid fraction and the condensation/expansion chamber for the blow-by flow;
- Fig. 2 is an embodiment example of the oil filtration circuit highlighting the connections between the inventive device and any internal combustion engine.

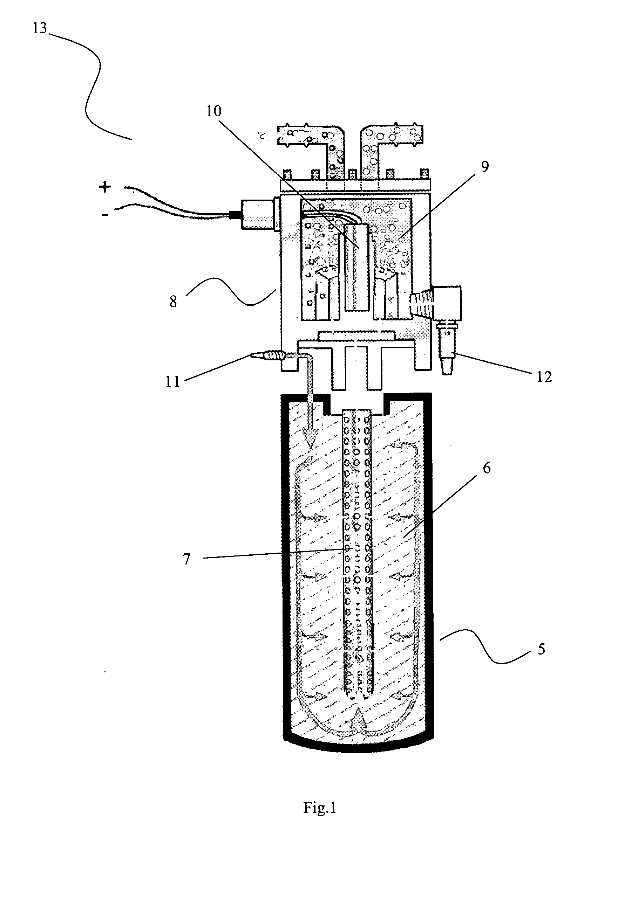

Referring to fig. 1, the entire filtration device 13 is made up of a traditional filter 5 for removing solid impurities from the motor oil, comprising a cylindrical recess 6 accommodating a filter cartridge and a central duct 7 therein, for the passage of the oil filtered from solid impurities towards the upper portion of the filter. An expansion/condensation chamber 8 is engaged at the top of the filter cartridge 5 for the expansion, separation of the liquid phase and filtration of the blow-by flow. Said chamber 8 is provided with a cylindrical recess 9 as well, which houses an electrode 10 therein for heating the same, and with a series of valves (11, 12) for adjusting the incoming and outgoing flows of the lubricant oil to be treated.

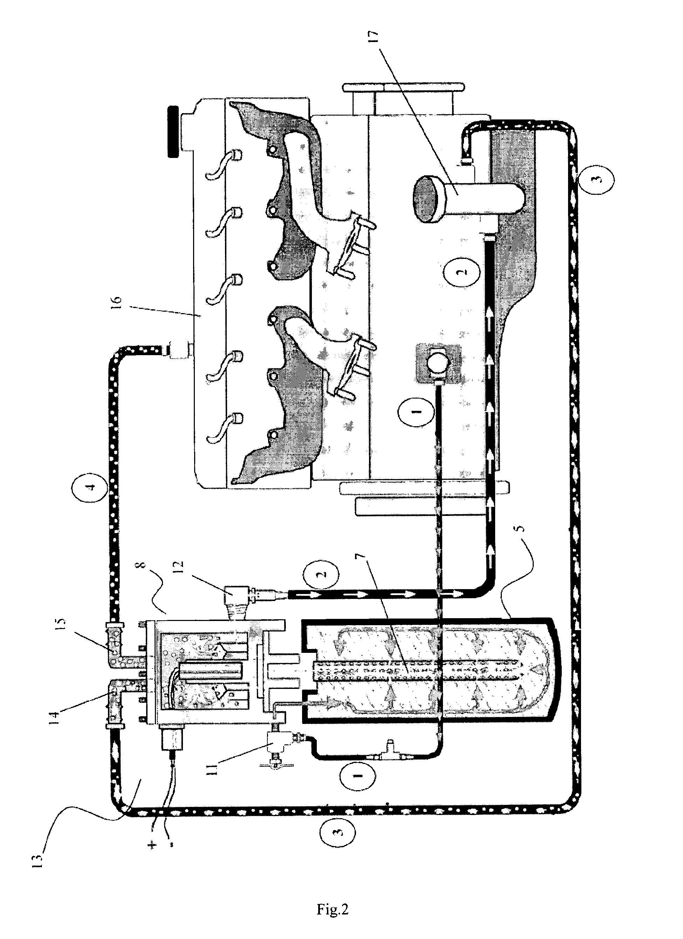

Referring to fig. 2, it is possible to analyse the filter functioning by means of its possible connections with an internal combustion engine. The contaminated motor oil coming from the engine sump arrives to the inlet of the filter 5 by means of line 1 by passing through the valve 11. The separation of solid contaminants from the motor oil occurs inside the filter 5, and by means of the duct 7, the motor oil arrives in the expansion/condensation chamber 8 where a first separation of the volatile compounds from the motor oil occurs. By passing through the outlet valve 12, the filtered oil returns in the engine sump by means of the line 2. At this time in the cycle, as it usually happens in case of traditional oil filters known in the state of art, the oil vapours going out from the sump 17, which are generally referred to with the term "blow-by" (mainly made up of a gaseous fraction and a residual liquid fraction), are recirculated in the suction duct of the engine, after being passed through a simple on-off valve which closes as the engine revolutions increase. Said valve can be easily obstructed and, however, it does not solve the undesired effect that a little liquid fraction of motor oil returns by suction 16 to the engine, thus compromising the efficiency of the combustion process. In order to solve this drawback, the inventive filter provides an expansion/filtration treatment of the blow-by flows, since the outgoing oil vapours vent outgoing from the sump 17 is conveyed by means of the line 3 again in the expansion/filtration chamber 8, where the liquid phase is separated from the same vapours and both the phases are filtered. Only after this treatment, the vapours outgoing from 15 are recirculated in the suction manifold 16 by means of the line 4.

Ultimately, the filtration device which is object of the present invention, even if it is an improvement of the patent to Premo Lubrication Technologies already known in the state of art, provides a fundamental new concept: the treatment of the blow-by flow. In fact, the expansion, the separation of the liquid phase and the filtration of the oil vapours in an expansion/condensation chamber prior to their re-inletting in the suction manifold leads to a series of advantages. First of all, motor oil in liquid phase is prevented from reaching the suction manifold without however obstructing the pneumatic connection between the engine sump and the suction manifold; moreover it improves the efficiency of the combustion which will occur inside the engine since the oil vapours are "cleaned" from the liquid phase which is strongly undesired during suction. The almost immediate consequence of the improvement in the functioning conditions of the engine is linked to longer ordinary maintenance times of the engines analysed by using the inventive device. Moreover, environmental damage in terms of harmful emissions of pollutants is advantageously avoided by using said device; this aspect is decidedly relevant above all in view of the continuous updating of the anti-pollutions rules.

## Claims

1. Filtration device (13) for motor oil along with blow-by flows treatment, comprising a filter (6) for removing the solid impurities and **characterized by** an expansion/condensation chamber (8) functioning for expanding, separating the liquid phase and filtering the blow-by vapours coming from the sump of the engine.

2. Filtration device (13) for motor oil according to claim 1, **characterized in that** said filter (5) is made up of a cylindrical recess (6) provided with a filter cartridge and a central duct (7) therein, for the passage of oil filtered from solid impurities towards the upper portion of the filter (13).

3. Filtration device (13) for motor oil according to claim 1 or 2, **characterized in that** said expansion/condensation chamber (8) is made up of a cylindrical recess (9) as well, which is provided with an electrode (10) therein, for heating the same and of a plurality of valves (11, 12, 14, 15) for adjusting the incoming and outgoing flows of lubricant oil to be treated.

4. Method for filtering motor oil by means of the filtration device (13) according to any one of claims 1 to 3, **characterized in that** the oil vapours drawn from the sump (17) by means of the line (3) are treated inside the expansion/condensation chamber (8) to remove the residual liquid fraction from the same vapours, the method comprising at least one of the remaining steps:
• drawing contaminated oil from the engine by means of duct (1) and letting in the filter (13) by means of valve (11);
• separation of solid contaminants from the motor oil in the lower portion of the filter (5) and passage of the lubricant oil, by means of the duct (7), through the expansion/condensation chamber (8);
• first separation of the volatile compounds from the motor oil in the expansion/condensation chamber (8) provided with electrode (10) along with clean oil outgoing from the valve (12) and returning in the sump by means of duct (2);
• expansion of the blow-by flows coming from the engine sump by means of line (3) inside the expansion chamber (8);
• separation of the liquid oil in the blow-by flows from the vapour phase inside the expansion chamber (8);
• recirculating the vapours outgoing from the valve (15) in the suction manifold (16) by means of line (4).
